Europäisches Patentamt

European Patent Office

Office européen des brevets

(11) Veröffentlichungsnummer: **0 075 194**
**B1**

(12) **EUROPÄISCHE PATENTSCHRIFT**

(45) Veröffentlichungstag der Patentschrift:
10.07.85

(51) Int. Cl.⁴: **H 04 N 3/18**

(21) Anmeldenummer: **82108274.0**

(22) Anmeldetag: **08.09.82**

(54) Fernsehempfänger mit Infrarot-Fernbedienung.

(30) Priorität: **17.09.81 DE 3137081**

(43) Veröffentlichungstag der Anmeldung:
**30.03.83 Patentblatt 83/13**

(45) Bekanntmachung des Hinweises auf die Patenterteilung:
**10.07.85 Patentblatt 85/28**

(84) Benannte Vertragsstaaten:
**BE DE FR GB IT NL SE**

(56) Entgegenhaltungen:
**GB - A - 2 088 656**
**US - A - 4 122 396**

**SIEMENS-BAUTEILE-INFORMATIONEN, 10/1972, Heft
3, Berlin und München PETER SAUBER "Optimaler
Bedienungskomfort für Fernsehgeräte" Seiten 55, 56
ELEKTRONIKER, 1979, Nr. 14, Aarau DR. ING.
ECKEHARD SCHMIDT "Terrestrische Nutzung der
Sonnenenergie - Anwendungsbeispiele und
Erfahrungen" Seiten EL 32 - EL 38
SIEMENS COMPONENTS, Heft 2, März 1981, Berlin und
München KLAUS KAESEN "Photovoltaische
Solartechnik - eine Energietechnologie zur direkten
Nutzung der Sonnenenergie" Seiten 41-45**

(73) Patentinhaber: **Siemens Aktiengesellschaft, Berlin und
München Wittelsbacherplatz 2, D-8000 München 2 (DE)**

(72) Erfinder: **Dangschat, Rainer, Jahnstrasse 8,
D-8011 Landsham (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Fernsehempfänger, insbesondere Farbfernsehempfänger, mit Netzanschluß und Infrarot-Fernbedienung, der zur Nachladung einer Pufferbatterie Solarzellen aufweist. Ein derartiges Gerät kann der Literaturstelle »Siemens Components«, Heft 2, März 1981, S. 41–45, entnommen werden.

Fernsehempfänger mit Infrarot-Fernbedienung weisen drei Betriebszustände auf, nämlich »ausgeschaltet«, den Standby- oder Wartebetrieb und »eingeschaltet« für normalen Bild- und Tonempfang.

Damit der Empfänger auf Infrarot-Fernbedienungssignale reagieren kann, muß er zuvor auf Standby-Betrieb geschaltet werden. Dabei wird der Infrarot-Vorverstärker und eine Empfangs- bzw. Dekodierschaltung mit Spannung versorgt, so daß diese erkennen und prüfen kann, ob es sich bei dem vorhandenen Befehl um einen echten Einschaltbefehl handelt, oder um eine zufällige Störung durch andersartiges Licht, beispielsweise eine Reflexion.

Wird ein Befehl als richtig erkannt, so wird der Fernsehempfänger meist mittels eines Relais eingeschaltet, das heißt mit dem 220 V-Netz verbunden.

Das technische Problem betrifft die für den Standby-Betrieb erforderliche Stromversorgung, die üblicherweise einige Watt zur Versorgung des Infrarot-Verstärkers und Empfänger-Decoders abgeben muß. Dazu wird meist ein kleiner 50 Hz-Transformator mit Gleichrichtung, Siebung und Stabilisierung für Ausgangsspannungen von ca. 5 V und 12 V verwendet.

Besitzt das Gerät ein Schaltnetzteil, so kann man den eigentlichen Fernsehempfänger sekundärseitig abschalten und das Schaltnetzteil während des Standby-Betriebs mit geringer Leistung laufen lassen.

Wesentliche Nachteile der bekannten Standby-Stromversorgungen sind die Kosten, der dauernde Stromverbrauch von ca. 10 W und das, wenn auch geringe, Sicherheitsrisiko (Brandgefahr). So wird beispielsweise durch ein Lichtsignal, zum Beispiel eine rote LED, angezeigt, daß das Gerät noch im Standby-Betrieb ist, um den Benutzer daran zu erinnern, daß er den Empfänger nachts und vor längerer Abwesenheit, z. B. dem Urlaub, ausschalten soll.

Aufgabe der Erfindung ist es, ein Fernsehgerät der eingangs genannten Art anzugeben, bei dem die vorstehend aufgezeigten Schwierigkeiten im Standby-Betrieb umgangen sind.

Diese Aufgabe wird erfindungsgemäß dadurch gelöst, daß die Solarzellen am Fernsehgerät angeordnet sind, daß der Fernsehempfänger im Standby-Betrieb völlig vom Netz getrennt ist, und daß die Energie für das Einschaltrelais bei Inbetriebnahme des Geräts (Einschaltbefehl) der im Standby-Betrieb durch die Solarzellen aufgeladenen Pufferbatterie entnommen wird.

Mit C-MOS-Vorverstärkern und Empfangs-Decoderschaltungen ist es möglich, den Stromverbrauch bei ca. 5 V auf Werte in der Größenordnung von 1 mA zu reduzieren. Diese Leistung kann von den erfindungsgemäß am Fernsehgehäuse angeordneten Solarzellen schon bei normaler Zimmerbeleuchtung aufgebracht und zur Ladung einer 3–4zelligen Nickel-Kadmium-Batterie verwendet werden. Mit der so gespeicherten Energie ist es möglich, daß beim Erkennen eines Einschaltbefehls die Erregerwicklung des Einschaltrelais über einen Einschalttransistor mit Strom versorgt wird.

## Patentanspruch

Fernsehempfänger, insbesondere Farbfernsehempfänger, mit Netzanschluß und Infrarot-Fernbedienung, der zur Nachladung einer Pufferbatterie Solarzellen aufweist, dadurch gekennzeichnet, daß die Solarzellen am Fernsehgerät angeordnet sind, daß der Fernsehempfänger im Standby-Betrieb völlig vom Netz getrennt ist, und daß die Energie für das Einschaltrelais bei Inbetriebnahme des Geräts (Einschaltbefehl) der im Standby-Betrieb durch die Solarzellen aufgeladenen Pufferbatterie entnommen wird.

## Claim

A television receiver, in particular a colour television receiver which has a mains connection and an infrared remote control device and which has solar cells for re-charging a buffer battery, characterised in that the solar cells are arranged on the television set; that during standby operation, the television receiver is completely disconnected from the mains; and that when putting the set into operation (switch-on command), the energy for the switch-on relay is drawn from the buffer battery which is charged by the solar cells during the standby operation.

## Revendication

Récepteur de télévision, en particulier récepteur de télévision en couleur, avec raccordement sur le secteur et télécommande par rayonnement infrarouge, qui présente des cellules solaires pour la recharge d'une batterie tampon, caractérisé en ce que les cellules solaires sont disposées sur le téléviseur, que le récepteur de télévision est complètement coupé du secteur en régime attente et que l'énergie pour le relais d'enclenchement à la mise en marche de l'appareil (ordre d'enclenchement) est prélevée de la batterie tampon, laquelle est chargée par les cellules solaires pendant le régime attente.